(19) Europäisches Patentamt
European Patent Office
Office européen des brevets

(11) EP 2 269 962 B1

# (12) EUROPEAN PATENT SPECIFICATION

(45) Date of publication and mention of the grant of the patent:
**02.01.2013 Bulletin 2013/01**

(21) Application number: **09728932.6**

(22) Date of filing: **31.03.2009**

(51) Int Cl.:
***C03C 27/12*** *(2006.01)* ***C01G 9/02*** *(2006.01)*

(86) International application number:
**PCT/JP2009/056641**

(87) International publication number:
**WO 2009/123186 (08.10.2009 Gazette 2009/41)**

## (54) INTERMEDIATE FILM FOR LAMINATED GLASS, LAMINATED GLASS, AND ZINC OXIDE MICROPARTICLE DISPERSION

ZWISCHENFILM FÜR SCHICHTGLAS, SCHICHTGLAS UND ZINKOXIDMIKROPARTIKELDISPERSION

FILM INTERMÉDIAIRE POUR VERRE STRATIFIÉ, VERRE STRATIFIÉ, ET DISPERSION DE MICROPARTICULES D'OXYDE DE ZINC

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.03.2008 JP 2008092994**

(43) Date of publication of application:
**05.01.2011 Bulletin 2011/01**

(73) Proprietor: **Sekisui Chemical Co., Ltd.**
**Osaka 530-8565 (JP)**

(72) Inventors:
- **II, Daizo**
**Mishima-gun**
**Osaka 618-8589 (JP)**
- **FUKATANI, Juichi**
**Koka-shi**
**Shiga 528-8585 (JP)**
- **KITANO, Hirofumi**
**Koka-shi**
**Shiga 528-8585 (JP)**

(74) Representative: **Hart-Davis, Jason et al**
**Cabinet Beau de Loménie**
**158, rue de l'Université**
**75340 Paris Cedex 07 (FR)**

(56) References cited:
**EP-A1- 1 666 559**
**EP-A1- 1 785 404**
**WO-A1-2006/025484**
**JP-A- 9 291 298**
**JP-A- 2005 146 174**
**JP-A- 2006 188 705**
**JP-A- 2007 039 512**
**JP-A- 2007 045 636**
**JP-T- 2005 528 454**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 269 962 B1

## Description

### TECHNICAL FIELD

The present invention relates to an interlayer film for a laminated glass in which zinc oxide fine particles are excellently dispersed, a laminated glass, and a zinc oxide fine particle dispersion.

### BACKGROUND ART

A laminated glass is a safety glass because few glass fragments are scattered even if it is broken by impact from the outside. A laminated glass is widely employed in the windowpanes of motor vehicles such as automobiles, aircrafts, buildings and the like. Examples of a laminated glass include a laminated glass produced by interposing an interlayer film for a laminated glass, which contains a plasticizer and a polyvinyl butyral resin, between at least a pair of glasses.

However, there has been a problem that a laminated glass cannot shield infrared rays sufficiently, though it shows excellent safety. The wavelength range of infrared rays is in long-wavelength side as compared to that of visible light and is 780 nm or more. An amount of infrared energy is about 10% of an amount of ultraviolet energy. However, since infrared rays absorbed in a material are emitted as heat, infrared rays raise the ambient temperature. Accordingly, interrupting the infrared transmission through front and side windshields of automobiles can suppress the temperature rise inside the automobiles. In recent years, there has been a need for reduction of infrared transmittance of a laminated glass because an opening area of an automobile tends to be increased.

Patent Document 1 discloses an interlayer film for a laminated glass containing heat shielding fine particles, such as tin-doped indium oxide fine particles and antimony-doped tin oxide fine particles, and a polyvinyl acetal resin. The laminated glass with use of an interlayer film for a laminated glass, in which heat shielding fine particles are dispersed, is excellent in heat shielding property.

Since the price of the heat shielding fine particles such as tin-doped indium oxide fine particles and antimony-doped tin oxide fine particles is soaring, use of zinc oxide fine particles as heat shielding fine particles is considered. However, it is difficult to uniformly disperse zinc oxide fine particles in a thermoplastic resin such as a polyvinyl acetal resin, and therefore, there has been a problem that a laminated glass using an interlayer film for a laminated glass containing zinc oxide fine particles has high haze, so that visible light transmittance is reduced.

Patent Document 2 discloses phosphate ester as a dispersant for increasing dispersibility of heat shielding fine particles such as tin-doped indium oxide fine particles and antimony-doped tin oxide fine particles. However, there has been a problem that use of zinc oxide fine particles and phosphate ester in combination cannot increase dispersibility of zinc oxide fine particles.

Patent Document No. 1: WO01/25162

Patent Document No. 2: Japanese Kokai Publication No. 2001-302288 (JP-A 2001-302288)

EP 1 785 404 A1 shows an interlayer film for a laminated glass, which contains a polyvinyl acetal resin and a moisture resistance improver which may be poly(oxyethylene) octylphenyl ether phosphate.

EP 1 666 559 A1 shows an infrared-absorbing composition comprising a phosphoric acid ester compound including a phosphoric acid monoester represented by formula (1) below and a phosphoric acid diester represented by formula (2) below, and copper ion, wherein the ratio of said phosphoric acid monoester and said phosphoric acid diester is 30: 70 to 74 :26, as the molar ratio.

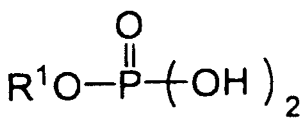 (1)

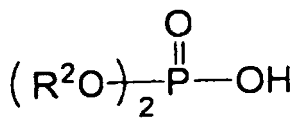 (2)

(wherein $R^1$ and $R^2$ each independently represent an ester bond-containing C4-18 group, a C4-18 alkyl group, a C4-18 alkenyl group or a C4-18 alkynyl group, and the multiple $R^2$ groups may be the same or different).

JP2005146174 A teaches manufacturing an inorganic fine particle-containing resin composition which can form a dielectric layer for a plasma display panel and contains a phosphoric acid ester which has an oxyethylene group and a preferable HLB value of 5-13.

DISCLOSURE OF THE INVENTION

PROBLEMS TO BE SOLVED BY THE INVENTION

It is an object of the present invention to provide an interlayer film for a laminated glass in which zinc oxide fine particles are excellently dispersed, a laminated glass, and a zinc oxide fine particle dispersion.

MEANS FOR SOLVING THE PROBLEMS

An interlayer film for a laminated glass according to the present invention comprises: zinc oxide fine particles containing a trivalent metallic element; a thermoplastic resin; a dispersant; and a plasticizer, the dispersant having a structure represented by the following general formula (1) and having an HLB value of 8 to 12:
[Chemical formula 1]

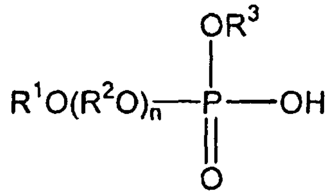
(1)

wherein $R^1$ represents an alkyl group having 5 to 14 carbon atoms or an aryl group having 6 to 14 carbon atoms, $R^2$ represents an alkylene group having 2 to 5 carbon atoms, $R^3$ represents a hydrogen atom or $R^4(OR^5)_n$-, wherein $R^4$ represents an alkyl group having 5 to 14 carbon atoms or an aryl group having 6 to 14 carbon atoms, and $R^5$ represents an alkylene group having 2 to 5 carbon atoms, and "n" is an integer of 1 or more, and the thermoplastic resin is polyvinylacetal resin.
The following will discuss the present invention in detail.
The interlayer film for a laminated glass according to the present invention comprises: zinc oxide fine particles containing a trivalent metallic element; a thermoplastic resin; a dispersant; and a plasticizer.
The interlayer film for a laminated glass according to the present invention comprises zinc oxide fine particles containing a trivalent metallic element.
The interlayer film for a laminated glass according to the present invention, in which zinc oxide fine particles are excellently dispersed, can be obtained by combining the zinc oxide fine particles and the specific dispersant to be mentioned later. With respect to the zinc oxide fine particles containing a trivalent metallic element, it is preferable to use zinc oxide fine particles doped with the trivalent metallic element.
The trivalent metallic element is not particularly limited, and examples thereof include gallium, aluminum, indium, and the like. The trivalent metallic element is preferably gallium among them. Two or more kinds of zinc oxide fine particles having different trivalent metallic elements may be used in combination.
Furthermore, zinc oxide fine particles containing the trivalent metallic element and zinc oxide fine particles containing an element other than the trivalent metallic element may be used in combination, and zinc oxide fine particles containing the trivalent metallic element and an element other than the trivalent metallic element may be used.
A content of the trivalent metallic element in the zinc oxide fine particles containing a trivalent metallic element is not particularly limited; a preferred lower limit of the percentage of the number of moles of the trivalent metallic element to the total number of moles of the zinc element and the trivalent metallic element is 1.0 mol%, and a preferred upper limit thereof is 10 mol%. When the percentage of the number of moles of the trivalent metallic element is less than 1.0 mol%, infrared transmittance of the laminated glass may not decrease; and when it exceeds 10 mol%, it may be difficult to produce zinc oxide fine particles. A more preferred lower limit of the percentage of the number of moles is 1.5 mol%, and a further preferred lower limit thereof is 2.0 mol%. A more preferred upper limit thereof is 8.0 mol%, and a further preferred lower limit thereof is 6.0 mol%.
The method for producing the zinc oxide fine particles containing a trivalent metallic element is not particularly limited, and conventional methods can be used. Examples of the method for producing the zinc oxide fine particles containing a trivalent metallic element include a coprecipitation method, a sintering method, an arc-discharge gas phase method, a spray pyrolysis method, and the like.
In the coprecipitation method, there is produced an aqueous solution containing: a water-soluble zinc compound such as zinc sulfate, zinc nitrate, zinc chloride, zinc carbonate, and zinc acetate; and a water-soluble salt of a trivalent

metallic element. The coprecipite of the zinc compound is generated by neutralizing the aqueous solution. The obtained coprecipitate is fired under reducing atmosphere, and thereby it is possible to produce zinc oxide fine particles containing a trivalent metallic element.

In the arc-discharge gas phase method, for example, by reacting zinc vapor and vapor of a trivalent metallic element by using an oxidizing gas, it is possible to produce zinc oxide fine particles containing a trivalent metallic element.

In the spray pyrolysis method, an aqueous solution containing a water-soluble zinc compound and a water-soluble salt of a trivalent metallic element is finely sprayed into fire, hot combustion gases, or plazma, by using a nozzle. Subsequently, the water-soluble salt of a trivalent metallic element is thermally decomposed, or a metal ion of the trivalent metallic element is oxidized with an oxidizing gas, whereby it is possible to produce zinc oxide fine particles containing a trivalent metallic element.

The water-soluble salt of a trivalent metallic element is not particularly limited, and examples thereof include an inorganic salt and an organic salt of the metallic element, and the like. The inorganic salt of the metallic element is not particularly limited, and examples thereof include halide, carbonate, bicarbonate, nitrate, sulfate, phosphate, silicate, and borate of the metallic element, and the like. The organic salt of the metallic element is not particularly limited, and examples thereof include organic acid salts such as acetate, oxalate, formate, glycolate, citrate, and the like. Further, the salt of the metallic element may be a double salt of an inorganic salt and an organic salt.

The volume average particle diameter of the zinc oxide fine particles containing a trivalent metallic element is not particularly limited, and a preferred upper limit thereof is 500 nm. When the volume average particle diameter is more than 500 nm, visible light transmittance of the obtained laminated glass may be reduced. A more preferred upper limit of the volume average particle diameter is 200 nm. A further preferred upper limit thereof is 100 nm, and a particularly preferred upper limit thereof is 60 nm.

A content of the zinc oxide fine particles containing a trivalent metallic element in the interlayer film for a laminated glass of the present invention is not particularly limited. A preferred lower limit thereof is 0.01 parts by weight and a preferred upper limit thereof is 5.0 parts by weight, with respect to 100 parts by weight of the thermoplastic resin. When the content of the zinc oxide fine particles containing a trivalent metallic element is less than 0.01 parts by weight, the infrared transmittance of the obtained laminated glass may not be reduced. When the content of the zinc oxide fine particles containing a trivalent metallic element is more than 5.0 parts by weight, the visible light transmittance of the obtained laminated glass may be reduced. A more preferred lower limit of the content of the zinc oxide fine particles containing a trivalent metallic element is 0.03 parts by weight and a more preferred upper limit thereof is 3.0 parts by weight.

The interlayer film for a laminated glass according to the present invention comprises a dispersant.
The dispersant has a structure represented by the following general formula (1), and has an HLB value of 8 to 12.

[Chemical formula 2]

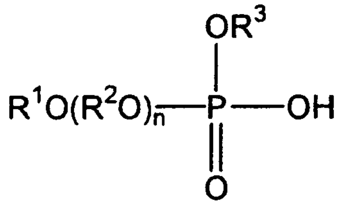

(1)

wherein $R^1$ represents an alkyl group having 5 to 14 carbon atoms or an aryl group having 6 to 14 carbon atoms, $R^2$ represents an alkylene group having 2 to 5 carbon atoms, $R^3$ represents a hydrogen atom or $R^4(OR^5)_n$-, wherein $R^4$ represents an alkyl group having 5 to 14 carbon atoms or an aryl group having 6 to 14 carbon atoms and $R^5$ represents an alkylene group having 2 to 5 carbon atoms, and "n" is an integer of 1 or more.

The interlayer film for a laminated glass according to the present invention, in which zinc oxide fine particles are excellently dispersed, can be obtained by combining the dispersant with the zinc oxide fine particles.

When $R^1$ and $R^4$ in the general formula (1) are alkyl groups, the lower limit of the number of carbon atoms of $R^1$ and $R^4$ in the general formula (1) is 5, and the upper limit thereof is 14. When the number of carbon atoms of $R^1$ and $R^4$ is less than five, since the hydrophilicity of the alkyl group of the dispersant is strong, the dispersant may not be compatible with a thermoplastic resin or a plasticizer. Consequently, visible light transmittance of the laminated glass decreases. When the number of carbon atoms of $R^1$ and $R^4$ exceeds 14, since lipophilic property of the alkyl group of the dispersant is strong, the dispersant may not be compatible with a thermoplastic resin or a plasticizer. Consequently, visible light transmittance of the laminated glass decreases. A preferred lower limit of the number of carbon atoms of $R^1$ and $R^4$ is 6, a more preferred lower limit thereof is 8, and a preferred upper limit thereof is 13. It is to be noted that $R^1$ and $R^4$ may be the same or different alkyl groups, and are preferably the same alkyl groups.

When $R^1$ and $R^4$ in the general formula (1) are aryl groups, the lower limit of the number of carbon atoms of $R^1$ and $R^4$ in the general formula (1) is 6, the upper limit thereof is 14. When the number of carbon atoms of $R^1$ and $R^4$ exceeds 14, since the lipophilic property of the aryl group of the dispersant is strong, the dispersant may not be compatible with a thermoplastic resin or a plasticizer. Consequently, visible light transmittance of the laminated glass decreases. A prefered lower limit of the number of carbon atoms of $R^1$ and $R^4$ is 7, a more preferred lower limit thereof is 9, and a particularly preferable lower limit thereof is 11. Because of its excellent compatibility with a thermoplastic resin or a plasticizer, $R^1$ and $R^4$ in the general formula (1) are preferably 2-ethylhexyl groups or tridecyl groups. It is to be noted that $R^1$ and $R^4$ may be the same or different aryl groups, and are preferably the same aryl groups.

$R^2$ and $R^5$ in the general formula (1) represent alkylene groups each having 2 to 5 carbon atoms. $R^2$ and $R^5$ are preferably alkylene groups having 2 to 4 carbon atoms, more preferably ethylene groups, propylene groups, or butylene groups, further preferably ethylene groups or propylene groups, and particularly preferably ethylene groups. $R^2$ and $R^5$ may be the same or different alkylene groups, and are preferably the same alkylene groups.

The symbol "n" in the general formula (1) is an integer of 1 or more. The symbol "n" in the general formula (1) is related to the HLB value of the dispersant. As "n" in the general formula (1) becomes larger, the molecular weight of the hydrophilic group of the dispersant increases, and therefore, the HLB value of the dispersant rises. As "n" in the general formula (1) becomes smaller, the molecular weight of the hydrophilic group of the dispersant decreases, and therefore, the HLB value of the dispersant falls.

When "n" is zero, since the dispersant is less likely to adhere to the zinc oxide fine particles, the zinc oxide fine particles agglomerate. A preferred upper limit of "n" in the general formula (1) is 50, and a more preferred upper limit thereof is 20. When "n" exceeds 50, since the dispersant excessively adhere to the zinc oxide fine particles, the zinc oxide fine particles may agglomerate.

It is to be noted that the HLB value can be adjusted by controlling the value of "n" in the general formula (1). Upon using, in combination, two or more kinds of dispersants having a structure represented by the general formula (1), the HLB value can be controlled by adjusting the blending ratio of the dispersant.

The lower limit of the HLB value of the dispersant is 8, and the upper limit thereof is 12. When the HLB value is less than 8, since lipophilic property of the dispersant is strong, the dispersant is less likely to be compatible with a thermoplastic resin or a plasticizer. Consequently, visible light transmittance of the laminated glass decreases. When the HLB value exceeds 12, since hydrophilicity of the dispersant is strong, the dispersant is less likely to be compatible with a thermoplastic resin or a plasticizer. Consequently, visible light transmittance of the laminated glass decreases. A preferred lower limit of the HLB value is 8.5, a more preferred lower limit thereof is 9, a preferred upper limit thereof is 11, and a more preferred upper limit thereof is 10.

It is to be noted that the HLB value of the present invention is defined by the following equation by the Griffin method.

$$\text{HLB value} = 20 \times (\text{molecular weight of hydrophilic group of dispersant/molecular weight of dispersant})$$

Here, the molecular weight of the hydrophilic group means the total atomic weight of $-(OR^2)_n-$ and $-(OR^5)_n-$. Upon using, in combination, two or more kinds of dispersants having a structure represented by the general formula (1), the HLB value of the present invention is defined by the following equation.

HLB value = 20 x (number-average molecular weight of hydrophilic group of dispersant/number-average molecular weight of dispersant)

The dispersant is not particularly limited, and examples thereof include: a dispersant having a structure represented by the general formula (1) in which $R^1$ represents an isobutyl group having 5 carbon atoms ($R^2$ represents an ethylene group, $R^3$ represents a mixture of a hydrogen atom and $R^4(OR^5)_n-$, wherein $R^4$ represents an isobutyl group and $R^5$ represents an ethylene group, the HLB value is 11.0, and "n" is an integer of 1 or more); a dispersant having a structure represented by the general formula (1) in which $R^1$ represents a 2-ethylhexyl group having 8 carbon atoms ($R^2$ represents an ethylene group, $R^3$ represents a mixture of a hydrogen atom and $R^4(OR^5)_n-$, wherein $R^4$ represents a 2-ethylhexyl group and $R^5$ represents an ethylene group, the HLB value is 10.0, and "n" is an integer of 1 or more); a dispersant having a structure represented by the general formula (1) in which $R^1$ represents a lauryl group having 12 carbon atoms ($R^2$ represents an ethylene group, $R^3$ represents a mixture of a hydrogen atom and $R^4(OR^5)_n-$, wherein $R^4$ represents a lauryl group and $R^5$ represents an ethylene group, the HLB value is 8.0, and "n" is an integer of 1 or more); a dispersant having a structure represented by the general formula (1) in which $R^1$ represents a tridecyl group having 13 carbon atoms ($R^2$ represents an ethylene group, $R^3$ represents a mixture of a hydrogen atom and $R^4(OR^5)_n-$, wherein $R^4$ represents a tridecyl group and $R^5$ represents an ethylene group, the HLB value is 9.4, and "n" is an integer of 1 or more); a dispersant having a structure represented by the general formula (1) in which $R^1$ represents an octylphenyl group having 14 carbon atoms ($R^2$ represents an ethylene group, $R^3$ represents a mixture of a hydrogen atom and $R^4(OR^5)_n-$, wherein $R^4$ represents an octylphenyl group and $R^5$ represents an ethylene group, the HLB value is 12.0, and

"n" is an integer of 1 or more) ; a dispersant having a structure represented by the general formula (1) in which $R^1$ represents a 2-ethylhexyl group having 8 carbon atoms ($R^2$ represents a propylene group, $R^3$ represents a mixture of a hydrogen atom and $R^4(OR^5)_n$-, wherein $R^4$ represents a 2-ethylhexyl group and $R^5$ represents a propylene group, the HLB value is 9.4, and "n" is an integer of 1 or more); a dispersant having a structure represented by the general formula (1) in which $R^1$ represents a 2-ethylhexyl group having 8 carbon atoms ($R^2$ represents a butylene group, $R^3$ represents a mixture of a hydrogen atom and $R^4$ $(OR^5)_n$-, wherein $R^4$ represents a 2-ethylhexyl group and $R^5$ represents a butylene group, the HLB value is 8.8, and "n" is an integer of 1 or more); and the like.
The dispersant having a structure represented by the general formula (1) is commercially available from Dai-ichi Kogyo Seiyaku Co., Ltd. and TOHO Chemical Industry Co., LTD., for example. It is to be noted that many commercial dispersants having a structure represented by the general formula (1) may be a mixture of the dispersant in which $R^3$ is a hydrogen atom and the dispersant in which $R^3$ is $R^4(OR^5)_n$-, or a mixture of a plurality of dispersants having different $R^1$ and "n".
A content of the dispersant in the interlayer film for a laminated glass according to the present invention is not particularly limited; a preferred lower limit thereof is 1.0 part by weight and a preferred upper limit thereof is 50 parts by weight, with respect to 100 parts by weight of the zinc oxide fine particles. When the content of the dispersant is less than 1.0 part by weight, since dispersibility of the zinc oxide fine particles decreases, visible light transmittance of the laminated glass may fall. When the content of the dispersant exceeds 50 parts by weight, the haze of the laminated glass may become higher or the adhesion between the interlayer film for a laminated glass and glass may decline. A more preferred lower limit of the content of the dispersant is 2.0 parts by weight, a further preferred lower limit thereof is 3.0 parts by weight, a more preferred upper limit thereof is 40 parts by weight, and a further preferred upper limit thereof is 35 parts by weight.
The interlayer film for a laminated glass according to the present invention contains a polyvinyl acetal resin has excellent adhesion to glass.
The polyvinyl acetal resin can be produced by acetalizing polyvinyl alcohol with aldehyde. Two or more kinds of the polyvinyl acetal resin may be used in combination if necessary.
A preferred lower limit of the acetalization degree of the polyvinyl acetal resin is 40 mol%, a preferred upper limit thereof is 85 mol%, a more preferred lower limit thereof is 60 mol%, and a more preferred upper limit thereof is 75 mol%.
The polyvinyl alcohol can be produced by saponifying polyvinyl acetate.
The saponification degree of the polyvinyl alcohol is preferably 80 to 99.8 mol%.
A preferred lower limit of the polymerization degree of the polyvinyl alcohol is 200, and a preferred upper limit thereof is 3000. When the polymerization degree is less than 200, penetration resistance of the laminated glass may decrease. When the polymerization degree exceeds 3000, molding of the interlayer film for a laminated glass may be difficult. A more preferred lower limit of the polymerization degree is 500, and a more preferred upper limit thereof is 2000.
The aldehyde is not particularly limited, and aldehyde having 1 to 10 carbon atoms is suitably used. The aldehyde having 1 to 10 carbon atoms is not particularly limited, and examples thereof include n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde, benzaldehyde, and the like. In particular, n-butylaldehyde, n-hexylaldehyde, and n-valeraldehyde are preferable, and n-butylaldehyde having 4 carbon atoms is more preferable. Each of these aldehydes may be used alone or two or more kinds of these may be used in combination.
The interlayer film for a laminated glass of the present invention contains a plasticizer.
The plasticizer is not particularly limited, and examples thereof include organic ester plasticizers such as monobasic organic acid ester and polybasic organic acid ester, phosphate plasticizers such as an organic phosphate plasticizer and an organic phosphite plasticizer, and the like.
The monobasic organic acid ester is not particularly limited, and examples thereof include glycol esters obtained by reacting a glycol such as triethylene glycol, tetraethylene glycol, and tripropylene glycol, with a monobasic organic acid such as butyric acid, isobutyric acid, caproic acid, 2-ethylbutyric acid, heptylic acid, n-octylic acid, 2-ethylhexylic acid, pelargonic acid (n-nonylic acid), and decylic acid. In particular, triethylene glycol dialkyl acid ester such as triethylene glycol dicaproate, triethylene glycol di-2-ethylbutyrate, triethylene glycol di-n-octylate, and triethylene glycol di-2-ethylhexylate is preferable.
The polybasic organic acid ester is not particularly limited, and examples thereof include an ester compound of a polybasic organic acid, such as adipic acid, sebacic acid and azelaic acid, and alcohol having a straight-chain or branch structure and having 4 to 8 carbon atoms. In particular, dibutyl sebacate, dioctyl azelate, and dibutylcarbitol adipate are preferable.
The organic ester plasticizer is not particularly limited, and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutylcarbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylenebutyrate, diethylene glycol di-2-ethylbutyrate, diethylene glycol di-2-ethylhexanoate,

dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, triethylene glycol bis(2-ethylbutyrate), triethylene glycol di(2-ethylhexanoate), triethylene glycol diheptanoate, tetraethylene glycol diheptanoate, dihexyl adipate, dioctyl adipate, hexyl cyclohexyl adipate, a mixture of heptyl adipate and nonyl adipate, diisononyl adipate, heptyl nonyl adipate, dibutyl sebacate, and the like.

The organic phosphate plasticizer is not particularly limited, and examples thereof include tributoxyethyl phosphate, isodecyl phenylphosphate, triisopropyl phosphate, and the like.

The plasticizer is preferably at least one kind selected from the group consisting of dihexyl adipate (DHA), triethylene glycol di-2-ethylhexanoate (3GO), tetraethylene glycol di-2-ethylhexanoate (4GO), triethylene glycol di-2-ethylbutyrate (3GH), tetraethylene glycol di-2-ethylbutyrate (4GH), tetraethylene glycol diheptanoate (4G7), and triethylene glycol diheptanoate (3G7).

Since the plasticizer is less likely to be hydrolyzed, the plasticizer is preferably a diester compound such as triethylene glycol di-2-ethylhexanoate (3GO), triethylene glycol di-2-ethylbutyrate (3GH), tetraethylene glycol di-2-ethylhexanoate (4GO), and tetraethylene glycol diheptanoate (4G7). The plasticizer is more preferably tetraethylene glycol di-2-ethylhexanoate (4GO), tetraethylene glycol diheptanoate (4G7), and triethylene glycol di-2-ethylhexanoate (3GO). The plasticizer is further preferably triethylene glycol di-2-ethylhexanoate.

A content of the plasticizer in the interlayer film for a lamination glass of the present invention is not particularly limited. A preferred lower limit thereof is 25 parts by weight and a preferred upper limit thereof is 60 parts by weight, with respect to 100 parts by weight of the thermoplastic resin. When the content of the plasticizer is less than 25 parts by weight, penetration resistance of the obtained laminated glass may be deteriorated. When the content of the plasticizer is more than 60 parts by weight, a bleed out of the plasticizer may be caused. A more preferred lower limit of the content of the plasticizer is 30 parts by weight and a more preferred upper limit thereof is 50 parts by weight.

The interlayer film for a laminated glass of the present invention may contain a heat ray absorbent other than the zinc oxide fine particles containing a trivalent metallic element. The heat ray absorbent is not particularly limited, and examples thereof include tin-doped indium oxide fine particles, antimony-doped tin oxide fine particles, metal-doped tungsten oxide fine particles, lanthanum hexaboride fine particles, a phthalocyanine compound, and the like. In particular, the heat ray absorbent is preferably tin-doped indium oxide fine particles.

The interlayer film for a laminated glass of the present invention may contain additives such as a dispersing agent, an antioxidant, a light stabilizer, a flame retardant, an antistatic agent, an adhesion regulator, a moisture resistant agent, a heat reflecting agent, a fluorescent bleach, and a blue pigment.

The interlayer film for a laminated glass of the present invention may contain the dispersing agent. The dispersing agent is not particularly limited, and examples thereof include alcohol and the like. The alcohol is not particularly limited, and examples thereof include methanol, ethanol, n-propanol, isopropanol, n-butanol, isobutanol, t-butyl alcohol, 1-pentanol, isoamyl alcohol, s-amyl alcohol, 3-pentanol, tert-amyl alcohol, n-hexanol, methyl amyl alcohol, 2-ethylbutanol, n-heptanol, 2-heptanol, 3-heptanol, n-octanol, 2-octanol, 2-ethylhexanol, 3,5,5-trimethyl hexanol, nonanol, n-decanol, undecanol, trimethylnonyl alcohol, tetradecanol, heptadecanol, cyclohexanol, 2-methyl cyclohexanol, benzyl alcohol, and the like.

The interlayer film for a laminated glass according to the present invention may have a single-layered structure consisting only of one layer, or have a multi-layered structure obtained by laminating a plurality of layers.

The interlayer film for a laminated glass according to the present invention may have a multi-layered structure obtained by laminating two or more resin layers comprising a heat ray shielding layer. The heat ray shielding layer contains: the zinc oxide fine particles containing a trivalent metallic element; the thermoplastic resin; the dispersant having a structure represented by said general formula (1); and the plasticizer. In the multi-layered structure, two or more resin layers comprising at least a heat ray shielding layer may be laminated. The multi-layered structure preferably has at least three resin layers, and for example, any one layer of an outermost layer, an intermediate layer, and another outermost layer may be a heat ray shielding layer.

Moreover, when the interlayer film has the intermediate layer in which the polyvinyl acetal resin has an amount of hydroxyl groups of 15 to 25 mol%, an acetylation degree of 8 to 18 mol%, and an acetalization degree of 60 to 71 mol%, and the plasticizer has a content of 50 to 70 parts by weight with respect to 100 parts by weight of the polyvinyl acetal resin, the sound insulation of the laminated glass can be improved.

The method for producing the interlayer film for a laminated glass according to the present invention is not particularly limited, and for example, there is produced a zinc oxide fine particle dispersion comprising: zinc oxide fine particles containing a trivalent metallic element; the dispersant; and the plasticizer. The zinc oxide fine particle dispersion, the plasticizer, and the thermoplastic resin are kneaded to mold an interlayer film for a laminated glass.

The kneading method is not particularly limited, and examples thereof include a method using an extruder, a plastograph, a kneader, a Banbury mixer, a calender roll, and the like. The method using an extruder is preferable among them.

The method for molding the interlayer film for a laminated glass is not particularly limited, and examples thereof include an extrusion method, a calender method, a pressing method, and the like.

The zinc oxide fine particles are uniformly dispersed in the interlayer film for a laminated glass according to the present invention. Therefore, a laminated glass obtained by using the interlayer film for a laminated glass according to the present invention has a very high visible light transmittance.
The laminated glass obtained by using the interlayer film for a laminated glass according to the present invention constitutes one aspect of the present invention.

The laminated glass of the present invention is a laminated glass in which the interlayer film for a laminated glass according to the present invention is interposed between at least a pair of glass.
A glass plate used for the laminated glass of the present invention is not particularly limited, and examples thereof include: inorganic glass such as float plate glass, polished plate glass, molded plate glass, meshed plate glass, wired plate glass, colored plate glass, heat ray absorbing glass, heat reflecting glass, and green glass; plastic plates such as a polycarbonate plate and a polyacrylate plate; and the like.
The method for producing the laminated glass of the present invention is not particularly limited, and conventional methods can be used.

Since the laminated glass of the present invention is obtained by using the interlayer film for a laminated glass according to the present invention, it can be used suitably for windshields of motor vehicles such as automobiles.

A zinc oxide fine particle dispersion in which the zinc oxide fine particles are dispersed, namely, a zinc oxide fine particle dispersion comprising: zinc oxide fine particles containing a trivalent metallic element; a dispersant; and a plasticizer, wherein the dispersant having a structure represented by the above general formula (1) and having an HLB value of 8 to 12, also constitutes one aspect of the present invention.

## EFFECTS OF THE INVENTION

The present invention makes it possible to provide an interlayer film for a laminated glass in which zinc oxide fine particles are excellently dispersed, a laminated glass, and a zinc oxide fine particle dispersion.

## BEST MODE FOR CARRYING OUT THE INVENTION

Hereinafter, the present invention will be described in more detail with reference to examples. However, the present invention is not limited to these examples.

(Example 1)

(1) Production of a zinc oxide fine particle dispersion

An amount of 30 parts by weight of zinc oxide fine particles containing 4 mol% of gallium as a trivalent metallic element (volume average particle diameter: 20 nm), 267 parts by weight of triethylene glycol di-2-ethylhexanoate as a plasticizer, 3 parts by weight of polyoxyethylene alkylether phosphate ester (in the general formula (1), $R^1$ represented a 2-ethylhexyl group having 8 carbon atoms, $R^2$ represented an ethylene group, $R^3$ represented a mixture of a hydrogen atom and $R^4(OR^5)_n$-, wherein $R^4$ represented a 2-ethylhexyl group and $R^5$ represented an ethylene group, the HLB value was 10, and "n" was an integer of 1 or more) as a dispersant, and 1125 parts by weight of zirconia beads were mixed to obtain a mixture. The obtained mixture is dispersed for four hours by using a batch-type bead mill to produce a zinc oxide fine particle dispersion.

(2) Production of an interlayer film for a laminated glass

An amount of 12.6 parts by weight of the obtained zinc oxide fine particle dispersion and 100 parts by weight of a polyvinyl butyral resin (PVB: average polymerization degree of 1700, butyralization degree of 68.5 mol%, 30.6 mol% of hydroxyl group, and 0.9 mol% of acetyl group) as a thermoplastic resin were mixed. As a plasticizer, triethylene glycol di-2-ethylhexanoate was further added in such a manner that the total amount of the plasticizer reached 40 parts by weight with respect to 100 parts by weight of the thermoplastic resin, and the mixture was mixed to produce a thermoplastic resin composition.
The obtained thermoplastic resin composition was molded by using a counter-rotating twin-screw extruder to produce an interlayer film for a laminated glass having a thickness of 760 $\mu$m.

(3) Production of a laminated glass

The obtained interlayer film for a laminated glass was interposed between two sheets of clear float glass (5 cm in height $\times$ 5 cm in width $\times$ 2.5 mm in thickness). The laminated body was placed in a vacuum bag and the vacuum

bag was deaerated to 933.2 hPa. Subsequently, the vacuum bag was heated until the interior temperature of the vacuum bag reached 100°C and the vacuum bag was maintained at the temperature for 20 minutes. The vacuum bag was naturally cooled and the temporarily-bonded laminated glass was taken out. The temporarily-bonded laminated glass was autoclaved at a temperature of 135°C and at a pressure of 1.2 MPa for 20 minutes to produce a laminated glass.

(Example 2)

A zinc oxide fine particle dispersion, an interlayer film for a laminated glass, and a laminated glass were produced in the same manner as in Example 1, except that polyoxyethylene alkylether phosphate ester (in the general formula (1), $R^1$ represented a tridecyl group having 13 carbon atoms, $R^2$ represented an ethylene group, $R^3$ represented a mixture of a hydrogen atom and $R^4(OR^5)_n$-, wherein $R^4$ represented a tridecyl group and $R^5$ represented an ethylene group, the HLB value was 9.4, and "n" was an integer of 1 or more) was used as a dispersant.

(Example 3)

A zinc oxide fine particle dispersion, an interlayer film for a laminated glass, and a laminated glass were produced in the same manner as in Example 1, except that polyoxyethylene alkylether phosphate ester (in the general formula (1), $R^1$ represented a lauryl group having 12 carbon atoms, $R^2$ represented an ethylene group, $R^3$ represented a mixture of a hydrogen atom and $R^4(OR^5)_n$-, wherein $R^4$ represented a lauryl group and $R^5$ represented an ethylene group, the HLB value was 8.0, and "n" was an integer of 1 or more) was used as a dispersant.

(Example 4)

A zinc oxide fine particle dispersion, an interlayer film for a laminated glass, and a laminated glass were produced in the same manner as in Example 1, except that polyoxyethylene alkylether phosphate ester (in the general formula (1), $R^1$ represented an isobutyl group having 5 carbon atoms, $R^2$ represented an ethylene group, $R^3$ represents a mixture of a hydrogen atom and $R^4$ $(OR^5)_n$-, wherein $R^4$ represented an isobutyl group and $R^5$ represented an ethylene group, the HLB value was 11.0, and "n" was an integer of 1 or more) was used as a dispersant.

(Example 5)

A zinc oxide fine particle dispersion, an interlayer film for a laminated glass, and a laminated glass were produced in the same manner as in Example 1, except that polyoxyethylene alkylether phosphate ester (in the general formula (1), $R^1$ represented an octylphenyl group having 14 carbon atoms, $R^2$ represented an ethylene group, $R^3$represented a mixture of a hydrogen atom and $R^4(OR^5)_n$-, wherein $R^4$ represented an octylphenyl group and $R^5$ represented an ethylene group, the HLB value was 12.0, and "n" was an integer of 1 or more) was used as a dispersant.

(Comparative Example 1)

A zinc oxide fine particle dispersion, an interlayer film for a laminated glass, and a laminated glass were produced in the same manner as in Example 1, except that a thermoplastic resin composition was obtained by mixing 100 parts by weight of a polyvinyl butyral resin and 40 parts by weight of triethylene glycol di-2-ethylhexanoate.

(Comparative Example 2)

A zinc oxide fine particle dispersion, an interlayer film for a laminated glass, and a laminated glass were produced in the same manner as in Example 1, except that polyoxyethylene alkylether phosphate ester (in the general formula (1), $R^1$ represented a nonylphenyl group having 15 carbon atoms, $R^2$ represented an ethylene group, $R^3$ represented a mixture of a hydrogen atom and $R^4(OR^5)_n$-, wherein $R^4$ represented a nonylphenyl group and $R^5$ represented an ethylene group, the HLB value was 11.0, and "n" was an integer of 1 or more) was used as a dispersant and the composition ratio was adjusted as shown in Table 1.

(Comparative Example 3)

A zinc oxide fine particle dispersion, an interlayer film for a laminated glass, and a laminated glass were produced in the same manner as in Example 1, except that polyoxyethylene alkylether phosphate ester (in the general formula (1), $R^1$ represented a lauryl group having 12 carbon atoms, $R^2$ represented an ethylene group, $R^3$ represented a mixture of a hydrogen atom and $R^4(OR^5)_n$-, wherein $R^4$ represented a lauryl group and $R^5$ represented an ethylene group, the

HLB value was 12.3, and "n" was an integer of 1 or more) was used as a dispersant and the composition ratio was adjusted as shown in Table 1.

(Comparative Example 4)

A zinc oxide fine particle dispersion, an interlayer film for a laminated glass, and a laminated glass were produced in the same manner as in Example 1, except that polyoxyethylene alkylether phosphate ester (in the general formula (1), $R^1$ represented a butyl group having 4 carbon atoms, $R^2$ represented an ethylene group, $R^3$ represented a mixture of a hydrogen atom and $R^4(OR^5)_n$-, wherein $R^4$ represented a butyl group and $R^5$ represented an ethylene group, the HLB value was 10.0, and "n" was an integer of 1 or more) was used as a dispersant and the composition ratio was adjusted as shown in Table 1.

<Evaluation>

The zinc oxide fine particle dispersions obtained in Examples 1 to 5 and in Comparative Examples 2 to 4, and the laminated glasses obtained in Examples 1 to 5 and in Comparative Examples 1 to 4 were evaluated as follows. Table 1 shows the results.

(1) Evaluations on visible light transmittance (Tv) and infrared transmittance (Tir) of zinc oxide fine particle dispersions

The zinc oxide fine particle dispersion was diluted with the used plasticizer to the particle concentration shown in Table 1. The visible light transmittance (Tv) and the infrared transmittance (Tir) of the diluted zinc oxide fine particle dispersion were measured by using a spectrophotometer ("U-4100" produced by Hitachi High-Technologies Corporation), in conformity with JIS R 3106 (1998). It is to be noted that a quartz cell having a light path length of 1 mm was used.

(2) Evaluations on visible light transmittance (Tv) and infrared transmittance (Tir) of laminated glasses

The visible light transmittance (Tv) and the infrared transmittance (Tir) of the laminated glass were measured by using a spectrophotometer ("U-4100" produced by Hitachi High-Technologies Corporation), in conformity with JIS R 3106 (1998).

[Table 1]

| | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Dispersant | | $R^1$ in general formula (1) | 2-ethylhexyl group | tridecyl group | lauryl gram | isobutyl group | octylphenyl group | - | nonylphenyl group | lauryl group | butyl group |
| | | The number of carbon atoms of $R^1$ | 8 | 13 | 12 | 5 | 14 | - | 15 | 12 | 4 |
| | | Akylene portion of polyoxyalkylene | ethylene | ethylene | ethylene | ethylene | ethylene | - | ethylene | ethylene | ethylene |
| | | HL6 value | 10.0 | 9.4 | 8.0 | 11.0 | 12.0 | - | 11.0 | 12.3 | 10.0 |
| Zinc oxide fine particles containing trivalent metallic element | | Trivalent metal species | gallium | gallium | gallium | gallium | gallium | - | gallium | gallium | gallium |
| | | Content ratio of trivalent metal (mol %) | 4 | 4 | 4 | 4 | 4 | - | 4 | 4 | 4 |
| Zinc oxide fine particle dispersion | Composition (parts by weight) | Zinc oxide fine particles | 30 | 30 | 30 | 30 | 30 | - | 30 | 30 | 30 |
| | | Zinc oxide fine (3GO) Plasticizer (3G0) | 267 | 267 | 267 | 267 | 267 | - | 267 | 267 | 267 |
| | | Dispersant | 3 | 3 | 3 | 3 | 3 | - | 3 | 3 | 3 |
| | Physical properties | Particle concentration | 0.90 | 0.90 | 0.90 | 0.90 | 0.90 | - | 0.52 | 0.50 | 0.48 |
| | | Tv (%) | 81.7 | 81.5 | 81.4 | 81.0 | - | - | 60.1 | 67.1 | 65.8 |
| | | Ttr (%) | 82.7 | 82.7 | 82.5 | 82.3 | 82.5 | - | 82.9 | 82.9 | 82.9 |

(continued)

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Composition of interlayer film for laminated glass (parts by weight) | Zinc oxide fine particle dispersion | 12.6 | 12.6 | 12.6 | 12.0 | 12.6 | - | 7.4 | 7.1 | 6.8 |
| | Polyvinyl butyral | 100 | 100 | 100 | 100 | 100 | 100 | 100 | 100 | 100 |
| | Plasticizer (total amount) | 40 | 40 | 40 | 40 | 40 | 40 | 40 | 40 | 40 |
| Physical properties laminated glass | Particle concentration | 0.89 | 0.89 | 0.89 | 0.89 | 0.89 | | 0.53 | 0.50 | 0.48 |
| | Tv (%) | 76.1 | 76.0 | 75.8 | 75.8 | 75.9 | 89.0 | 66.4 | 66.8 | 65.5 |
| | Tir (%) | 84.9 | 64.9 | 64.8 | 64.7 | 64.8 | 75.0 | 65.0 | 65.0 | 65.0 |

(Example 6)

A zinc oxide fine particle dispersion, an interlayer film for a laminated glass, and a laminated glass were produced in the same manner as in Example 1, except that zinc oxide fine particles (volume average particle diameter: 20 nm) containing 4 mol% of aluminum as a trivalent metallic element were used instead of zinc oxide fine particles containing 4 mol% of gallium as a trivalent metallic element, and the composition ratio was adjusted as shown in Table 2.

(Example 7)

A zinc oxide fine particle dispersion, an interlayer film for a laminated glass, and a laminated glass were produced in the same manner as in Example 2, except that zinc oxide fine particles (volume average particle diameter: 20nm) containing 4 mol% of aluminum as a trivalent metallic element were used instead of zinc oxide fine particles containing 4 mol% of gallium as a trivalent metallic element, and the composition ratio was adjusted as shown in Table 2.

(Example 8)

A zinc oxide fine particle dispersion, an interlayer film for a laminated glass, and a laminated glass were produced in the same manner as in Example 3, except that zinc oxide fine particles (volume average particle diameter: 20 nm) containing 4 mol% of aluminum as a trivalent metallic element were used instead of zinc oxide fine particles containing 4 mol% of gallium as a trivalent metallic element, and the composition ratio was adjusted as shown in Table 2.

(Example 9)

A zinc oxide fine particle dispersion, an interlayer film for a laminated glass, and a laminated glass were produced in the same manner as in Example 4, except that zinc oxide fine particles (volume average particle diameter: 20 nm) containing 4 mol% of aluminum as a trivalent metallic element were used instead of zinc oxide fine particles containing 4 mol% of gallium as a trivalent metallic element, and the composition ratio was adjusted as shown in Table 2.

(Example 10)

A zinc oxide fine particle dispersion, an interlayer film for a laminated glass, and a laminated glass were produced in the same manner as in Example 5, except that zinc oxide fine particles (volume average particle diameter: 20 nm) containing 4 mol% of aluminum as a trivalent metallic element were used instead of zinc oxide fine particles containing 4 mol% of gallium as a trivalent metallic element, and the composition ratio was adjusted as shown in Table 2.

<Evaluation>

The zinc oxide fine particle dispersions and the laminated glasses obtained in Examples 6 to 10 were evaluated in the same manner as in Example 1.
Table 2 shows the results.
[Table 2]

| | | Example 6 | Example 7 | Example 8 | Example 9 | Example 10 |
|---|---|---|---|---|---|---|
| Dispersant | $R^1$ in general formula (1) | 2-ethylhexyl group | tridecyl group | lauryl group | isobutyl group | octylphenyl group |
| | The number of carbon atoms of $R^1$ | 8 | 13 | 12 | 5 | 14 |
| | Alkylene portion of polyoxyalkylene | ethylene | ethylene | ethylene | ethylene | ethylene |
| | HLB value | 10.0 | 9.4 | 8.0 | 11.0 | 12.0 |

(continued)

| | | | Example 6 | Example 7 | Example 8 | Example 9 | Example 10 |
|---|---|---|---|---|---|---|---|
| Zinc oxide fine particles containing trivalent metallic element | | Trivalent metal species | aluminum | aluminum, | aluminum | aluminum | aluminum |
| | | Content ratio of trivalent metal (mol %) | 4 | 4 | 4 | 4 | 4 |
| Zinc oxide fine particle dispersion | Composition (parts by weight) | Zinc oxide fine particles | 30 | 30 | 30 | 30 | 30 |
| | | Plasticizer (3GO) | 267 | 267 | 267 | 267 | 267 |
| | | Dispersant | 3 | 3 | 3 | 3 | 3 |
| | Physical properties | Particle concentration (% by weight) | 0.92 | 0.92 | 0.92 | 0.92 | 0.92 |
| | | Tv (%) | 81.1 | 80.9 | 80.7 | 80.4 | 80.6 |
| | | Tir (%) | 82.7 | 82.7 | 82.6 | 82.7 | 82.7 |
| Composition of interlayer film for laminated glass (parts by weight) | | Zinc oxide fine particle dispersion | 12.9 | 12.9 | 12.9 | 12.9 | 12.9 |
| | | Polyvinyl butyral | 100 | 100 | 100 | 100 | 100 |
| | | Plasticizer (total amount) | 40 | 40 | 40 | 40 | 40 |
| Physical properties of laminated glass | | Particle concentration (% by weight) | 0.91 | 0.91 | 0.91 | 0.91 | 0.91 |
| | | Tv (%) | 76.0 | 75.9 | 75.8 | 75.7 | 75.7 |
| | | Tir (%) | 65.0 | 64.9 | 65.0 | 65.0 | 65.0 |

(Example 11)

A zinc oxide fine particle dispersion, an interlayer film for a laminated glass, and a laminated glass were produced in the same manner as in Example 1, except that zinc oxide fine particles (volume average particle diameter: 20 nm) containing 4 mol% of indium as a trivalent metallic element were used instead of zinc oxide fine particles containing 4 mol% of gallium as a trivalent metallic element, and the composition ratio was adjusted as shown in Table 3.

(Example 12)

A zinc oxide fine particle dispersion, an interlayer film for a laminated glass, and a laminated glass were produced in the same manner as in Example 2, except that zinc oxide fine particles (volume average particle diameter: 20 nm) containing 4 mol% of indium as a trivalent metallic element were used instead of zinc oxide fine particles containing 4 mol% of gallium as a trivalent metallic element, and the composition ratio was adjusted as shown in Table 3.

(Example 13)

A zinc oxide fine particle dispersion, an interlayer film for a laminated glass, and a laminated glass were produced in the same manner as in Example 3, except that zinc oxide fine particles (volume average particle diameter: 20 nm) containing 4 mol% of indium as a trivalent metallic element were used instead of zinc oxide fine particles containing 4 mol% of gallium as a trivalent metallic element, and the composition ratio was adjusted as shown in Table 3.

(Example 14)

A zinc oxide fine particle dispersion, an interlayer film for a laminated glass, and a laminated glass were produced in the same manner as in Example 4, except that zinc oxide fine particles (volume average particle diameter: 20 nm) containing 4 mol% of indium as a trivalent metallic element were used instead of zinc oxide fine particles containing 4 mol% of gallium as a trivalent metallic element, and the composition ratio was adjusted as shown in Table 3.

(Example 15)

A zinc oxide fine particle dispersion, an interlayer film for a laminated glass, and a laminated glass were produced in the same manner as in Example 5, except that zinc oxide fine particles (volume average particle diameter: 20 nm) containing 4 mol% of indium as a trivalent metallic element were used instead of zinc oxide fine particles containing 4 mol% of gallium as a trivalent metallic element, and the composition ratio was adjusted as shown in Table 3.

<Evaluation>

The zinc oxide fine particle dispersions and the laminated glasses obtained in Examples 11 to 15 were evaluated in the same manner as in Example 1.
Table 3 shows the results.

[Table 3]

| | | | Example 11 | Example 12 | Example 13 | Example 14 | Example 15 |
|---|---|---|---|---|---|---|---|
| Dispersant | | $R^1$ in general formula (1) | 2-ethylhexyl group | tridecyl group | lauryl group | isobutyl group | octylphenyl group |
| | | The number of carbon atoms of $R^1$ | 8 | 13 | 12 | 5 | 14 |
| | | Alkylene portion of polyoxyalkylene | ethylene | ethylene | ethylene | ethylene | ethylene |
| | | HLB value | 10.0 | 9.4 | 8.0 | 11.0 | 12.0 |
| Zinc oxide fine particles containing trivalent metallic element | | Trivalent metal species | indium | indium | indium | indium | indium |
| | | Content ratio of trivalent metal (mol %) | 4 | 4 | 4 | 4 | 4 |
| Zinc oxide fine particle dispersion | Composition (parts by weight) | Zinc oxide fine particles | 30 | 30 | 30 | 30 | 30 |
| | | Plasticizer (3GO) | 267 | 267 | 267 | 267 | 267 |
| | | Dispersant | 3 | 3 | 3 | 3 | 3 |
| | Physical properties | Particle concentration (% by weight) | 0.95 | 0.95 | 0.95 | 0.95 | 0.95 |
| | | Tv (%) | 80.3 | 80.1 | 79.8 | 79.8 | 79.7 |
| | | Tir (%) | 82.7 | 82.6 | 82.6 | 82.7 | 82.7 |

(continued)

| | | Example 11 | Example 12 | Example 13 | Example 14 | Example 15 |
|---|---|---|---|---|---|---|
| Composition of interlayer film for laminated glass (parts by weight) | Zinc oxide fine particle dispersion | 13.3 | 13.3 | 13.3 | 13.3 | 13.3 |
| | Polyvinyl butyral | 100 | 100 | 100 | 100 | 100 |
| | Plasticizer (total amount) | 40 | 40 | 40 | 40 | 40 |
| Physical properties of laminated glass | Particle concentration(% by weight) | 0.94 | 0.94 | 0.94 | 0.94 | 0.94 |
| | Tv (%) | 75.5 | 75.3 | 75.3 | 75.2 | 75.1 |
| | Tir (%) | 65.0 | 65.0 | 65.0 | 65.0 | 65.0 |

(Example 16)

A zinc oxide fine particle dispersion, an interlayer film for a laminated glass, and a laminated glass were produced in the same manner as in Example 1, except that as a dispersant, polyoxypropylene alkylether phosphate ester (in the general formula (1), $R^1$ represented a 2-ethylhexyl group having 8 carbon atoms, $R^2$ represented a propylene group, $R^3$ represented a mixture of a hydrogen atom and $R^4(OR^5)_n$-, wherein $R^4$ represented a 2-ethylhexyl group and $R^5$ represented a propylene group, the HLB value was 9.4, and "n" was an integer of 1 or more) was used instead of polyoxyethylene alkylether phosphate ester (in the general formula (1), $R^1$ represented a 2-ethylhexyl group having 8 carbon atoms, $R^2$ represented an ethylene group, $R^3$ represented a mixture of a hydrogen atom and $R^4(OR^5)_n$-, wherein $R^4$ represented a 2-ethylhexyl group and $R^5$ represented an ethylene group, the HLB value was 10, and "n" was an integer of 1 or more).

(Example 17)

A zinc oxide fine particle dispersion, an interlayer film for a laminated glass, and a laminated glass were produced in the same manner as in Example 16, except that polyoxybuthylene alkylether phosphate ester (in the general formula (1), $R^1$ represented a 2-ethylhexyl group having 8 carbon atoms, $R^2$ represented an buthylene group, $R^3$ represented a mixture of a hydrogen atom and $R^4(OR^5)_n$-, wherein $R^4$ represented a 2-ethylhexyl group and $R^5$ represented an buthylene group, the HLB value was 8.8, and "n" was an integer of 1 or more) was used as a dispersant.

<Evaluation>

The zinc oxide fine particle dispersions and the laminated glasses obtained in Examples 16 to 17 were evaluated in the same manner as in Example 1.
Table 4 shows the results.

[Table 4]

| | | Example 16 | (Example 17 |
|---|---|---|---|
| Dispersant | R in general formula (1) | 2-ethylhexyl group | 2-ethylhexyl group |
| | The number of carbon atoms of $R^1$ | 8 | 8 |
| | Alkylene portion of polyoxyalkylene | propylene | butylene |
| | HLB value | 9.4 | 8.8 |

(continued)

| | | | Example 16 | (Example 17 |
|---|---|---|---|---|
| Zinc oxide fine particles containing trivalent metallic element | | Trivalent metal species | gallium | gallium |
| | | Content ratio of trivalent metal (mol%) | 4 | 4 |
| Zinc oxide fine particle dispersion | Composition (parts by weight) | Zinc oxide fine particles | 30 | 30 |
| | | Plasticizer (3GO) | 267 | 267 |
| | | Dispersant | 3 | 3 |
| | Physical properties | Particle concentration (% by weight) | 0.90 | 0.90 |
| | | Tv (%) | 80.1 | 79.5 |
| | | Tir (%) | 82.6 | 82.5 |
| Composition of interlayer film for laminated glass (parts by weight) | | Zinc oxide fine particle dispersion | 12.6 | 12.6 |
| | | Polyvinyl butyral | 100 | 100 |
| | | Plasticizer (total amount) | 40 | 40 |
| Physical properties of laminated glass | | Particle concentration (% by weight) | 0.89 | 0.89 |
| | | Tv (%) | 75.3 | 75.3 |
| | | Tir (%) | 65.0 | 64.9 |

(Example 18)

A zinc oxide fine particle dispersion, an interlayer film for a laminated glass, and a laminated glass were produced in the same manner as in Example 1, except that the blending amount of the zinc oxide fine particle dispersion for producing an interlayer film for a laminated glass was changed to 16.8 parts by weight.

(Example 19)

A zinc oxide fine particle dispersion, an interlayer film for a laminated glass, and a laminated glass were produced in the same manner as in Example 18, except that the blending amount of the zinc oxide fine particle dispersion for producing an interlayer film for a laminated glass was changed to 19.3 parts by weight.

(Example 20)

A zinc oxide fine particle dispersion, an interlayer film for a laminated glass, and a laminated glass were produced in the same manner as in Example 18, except that the blending amount of a dispersant for producing a zinc oxide fine particle dispersion was changed to 1 part by weight, and the blending amount of the zinc oxide fine particle dispersion for producing an interlayer film for a laminated glass was changed to 12.6 parts by weight.

(Example 21)

A zinc oxide fine particle dispersion, an interlayer film for a laminated glass, and a laminated glass were produced in the same manner as in Example 18, except that the blending amount of a dispersant for producing a zinc oxide fine particle dispersion was changed to 10 parts by weight, and the blending amount of the zinc oxide fine particle dispersion for producing an interlayer film for a laminated glass was changed to 12.6 parts by weight.

(Example 22)

A zinc oxide fine particle dispersion, an interlayer film for a laminated glass, and a laminated glass were produced in the same manner as in Example 18, except that the blending amount of a plasticizer for producing a zinc oxide fine particle dispersion was changed to 200 parts by weight, 67 parts by weight of ethanol was blended instead, and the blending amount of the zinc oxide fine particle dispersion for producing an interlayer film for a laminated glass was changed to 12.6 parts by weight.

(Example 23)

A zinc oxide fine particle dispersion, an interlayer film for a laminated glass, and a laminated glass were produced in the same manner as in Example 22, except that polyoxyethylene alkylether phosphate ester (in the general formula (1), $R^1$ represented a tridecyl group having 13 carbon atoms, $R^2$ represented an ethylene group, $R^3$ represented a mixture of a hydrogen atom and $R^4(OR^5)_n$-, wherein $R^4$ represented a tridecyl group and $R^5$ represented an ethylene group, the HLB value was 9.4, and "n" was an integer of 1 or more) was used as a dispersant.

(Example 24)

A zinc oxide fine particle dispersion, an interlayer film for a laminated glass, and a laminated glass were produced in the same manner as in Example 18, except that polyoxyethylene alkylether phosphate ester (in the general formula (1), $R^1$ represented a 2-ethylhexyl group having 8 carbon atoms, $R^2$ represented an ethylene group, $R^3$ represented a mixture of a hydrogen atom and $R^4(OR^5)_n$-, wherein $R^4$ represented a 2-ethylhexyl group and $R^5$ represented an ethylene group, the HLB value was 10.0, and "n" was an integer of 1 or more) was used as a dispersant, and zinc oxide fine particles (volume average particle diameter: 20 nm) containing 2 mol% of gallium as a trivalent metallic element were used, and the blending amount of the zinc oxide fine particle dispersion for producing an interlayer film for a laminated glass was changed to 14.0 parts by weight.

(Example 25)

A zinc oxide fine particle dispersion, an interlayer film for a laminated glass, and a laminated glass were produced in the same manner as in Example 24, except that zinc oxide fine particles containing 6 mol% of gallium as a trivalent metallic element were used, and the blending amount of the zinc oxide fine particle dispersion for producing an interlayer film for a laminated glass was changed to 15.4 parts by weight.

(Example 26)

A zinc oxide fine particle dispersion, an interlayer film for a laminated glass, and a laminated glass were produced in the same manner as in Example 24, except that polyoxyethylene alkylether phosphate ester (in the general formula (1), $R^1$ represented a 2-ethylhexyl group having 8 carbon atoms, $R^2$ represented an ethylene group, $R^3$ represented a mixture of a hydrogen atom and $R^4(OR^5)_n$-, wherein $R^4$ represented a 2-ethylhexyl group and $R^5$ represented an ethylene group, the HLB value was 9.2, and "n" was an integer of 1 or more) was used as a dispersant, and zinc oxide fine particles (volume average particle diameter: 20 nm) containing 4 mol% of gallium as a trivalent metallic element were used, and the blending amount of the zinc oxide fine particle dispersion for producing an interlayer film for a laminated glass was changed to 12.6 parts by weight.

(Example 27)

A zinc oxide fine particle dispersion, an interlayer film for a laminated glass, and a laminated glass were produced in the same manner as in Example 24, except that zinc oxide fine particles (volume average particle diameter: 20 nm) containing 4 mol% of gallium as a trivalent metallic element and zinc oxide fine particles containing 4 mol% of gallium as a trivalent metallic element were used, tetraethylene glycol di-2-ethylhexanoate (4GO) was used as the plasticizer for producing a zinc oxide fine particle dispersion, and the blending amount of the zinc oxide fine particle dispersion for producing an interlayer film for a laminated glass was changed to 12.6 parts by weight.

(Example 28)

A zinc oxide fine particle dispersion, an interlayer film for a laminated glass, and a laminated glass were produced in the same manner as in Example 24, except that zinc oxide fine particles (volume average particle diameter: 20 nm)

containing 4 mol% of gallium as a trivalent metallic element were used, tetraethylene glycol diheptanoate (4G7) was used as the plasticizer for producing a zinc oxide fine particle dispersion, and the blending amount of the zinc oxide fine particle dispersion for producing an interlayer film for a laminated glass was changed to 12.6 parts by weight.

<Evaluation>

The zinc oxide fine particle dispersions and the laminated glasses obtained in Examples 18 to 28 were evaluated in the same manner as in Example 1.
Table 5 shows the results.

[Table 5]

| | | | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|---|
| Dispersant | | $R^1$ in general formula (1) | 2-ethylthexyl group | 2-ethylhexyl group | 2-ethylhexyl group | 2-ethylhexyl group | 2-ethylhoxyl group | tridacyl group | 2-ethylhexyl group | 2-ethylhexyl group | 2-ethylhexyl group | 1-ethythexyl group | 2-ethythexyl group |
| | | The number of carbon storms of $R^1$ | group 8 | 8 | 8 | 8 | 8 | 13 | 8 | 8 | 8 | 8 | 6 |
| | | Alkylene portion of polyoxyalkylene | ethylene | ethylene | ethylene | ethylene | ethylene | ethylene | ethylene | ethylene | ethylene | ethylene | ethylene |
| | | HLB value | 10.0 | 10.0 | 10.0 | 10.0 | 10.0 | 9.4 | 10.0 | 10.0 | 9.2 | 10.0 | 10.0 |
| Zinc oxide fine particles containing trivalent metallic element | | Trivalent metal species | gallium | gallium | gallium | gallium | gallium | gallium | gallium | gallium | gallium | gallium | gallium |
| | | Content ratio of trivalent metal (mol%) | 4 | 4 | 4 | 4 | 4 | 4 | 2 | 6 | 4 | 4 | 4 |
| Zinc oxide fine particle dispersion | Composition (parts by weight) | Zinc oxide fine particles | 30 | 30 | 30 | 30 | 30 | 30 | 30 | 30 | 30 | 30 | 30 |
| | | Plasticizer (3GO) | 267 | 267 | 207 | 267 | 200 | 200 | 267 | 267 | 267 | 267 (4GO) | 267 (4G7) |
| | | Dispersant | 3 | 3 | 1 | 10 | 3 | 3 | 3 | 3 | 3 | 3 | 3 |
| | | Ethanol | - | - | - | - | 67 | 67 | - | - | - | - | - |
| | Physical properties | Particle concentration (% by weight) | 0.90 | 0.90 | 0.90 | 0.90 | 0.90 | 0.90 | 1.00 | 1.10 | 0.90 | 0.90 | 0.90 |
| | | Tv (%) | 81.7 | 81.7 | 81.7 | B1.5 | 61.9 | 61.7 | 80.6 | 70.9 | 81.6 | 81.5 | 81.1 |
| | | Tir (%) | 82.7 | 82.7 | 82.7 | 82.7 | 82.8 | 82.7 | 82.7 | 82.7 | 82.7 | 82.7 | 82.7 |

(continued)

| | | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|
| Composition of interlayer film for laminated glass (parts by weight) | Zinc oxide fine particle dispersion | 16.8 | 19.3 | 12.6 | 12.6 | 12.6 | 12.6 | 14.0 | 15.4 | 12.6 | 12.6 | 12.6 |
| | Polyvinyl butyral | 100 | 100 | 100 | 100 | 100 | 100 | 100 | 100 | 100 | 100 | 100 |
| | Plasticizer (total amount) | 40 | 40 | 40 | 40 | 40 | 40 | 40 | 40 | 40 | 40 | 40 |
| Physical ProPerties of laminated glass | Particle concentration (% by weight) | 1.18 | 1.36 | 0.90 | 0.87 | 0.89 | 0.89 | 0.99 | 1.09 | 0.89 | 0.89 | 0.69 |
| | Tv (%) | 72.4 | 70.2 | 75.8 | 76.0 | 76.2 | 76.2 | 75.4 | 74.9 | 76.0 | 75.9 | 75.7 |
| | Tir (%) | 62.3 | 60.9 | 64.6 | 64.9 | 65.0 | 65.0 | 64.9 | 64.9 | 04.9 | 64.9 | 64.9 |

(Example 29)

(1) Production of a zinc oxide fine particle dispersion

An amount of 30 parts by weight of zinc oxide fine particles containing 4 mol% of gallium as a trivalent metallic element, 267 parts by weight of triethylene glycol di-2-ethylhexanoate as a plasticizer, 3 parts by weight of polyoxyethylene alkylether phosphate ester (in the general formula (1), $R^1$ represented a 2-ethylhexyl group having 8 carbon atoms, $R^2$ represented an ethylene group, $R^3$ represented a mixture of a hydrogen atom and $R^4(OR^5)_n$-, wherein $R^4$ represented a 2-ethylhexyl group and $R^5$ represented an ethylene group, the HLB value was 10.0, and "n" was an integer of 1 or more) as a dispersant, and 1125 parts by weight of zirconia beads were mixed to obtain a mixture. The obtained mixture was dispersed for four hours by using a batch-type bead mill to produce a zinc oxide fine particle dispersion.

(2) Production of a tin-doped indium oxide fine particle dispersion

An amount of 30 parts by weight of tin-doped indium oxide fine particles, 267 parts by weight of triethylene glycol di-2-ethylhexanoate as a plasticizer, 3 parts by weight of polyphosphate salt as a dispersant, and 1125 parts by weight of zirconia beads were mixed to obtain a mixture. The obtained mixture was dispersed for four hours by using a batch-type bead mill to produce a tin-doped indium oxide fine particle dispersion.

(3) Production of an interlayer film for a laminated glass

An amount of 8.82 parts by weight of the obtained zinc oxide fine particle dispersion, 0.70 parts by weight of the obtained tin-doped indium oxide fine particle dispersion, and 100 parts by weight of a polyvinyl butyral resin as a thermoplastic resin were mixed. Triethylene glycol di-2-ethylhexanoate was further added as a plasticizer in such a manner that the total amount of the plasticizer reached 40 parts by weight with respect to 100 parts by weight of the thermoplastic resin, and the mixture was mixed to produce a thermoplastic resin composition.
The obtained thermoplastic resin composition was molded by using a counter-rotating twin-screw extruder to produce an interlayer film for a laminated glass having a thickness of 760 μm.

(4) Production of a laminated glass

The obtained interlayer film for a laminated glass was interposed between two sheets of clear float glass (5 cm in height × 5 cm in width × 2.5 mm in thickness). The laminated body was placed in a vacuum bag and the vacuum bag was deaerated to 933.2 hPa. Subsequently, the vacuum bag was heated until the interior temperature of the vacuum bag reached 100°C and maintained at the temperature for 20 minutes. The vacuum bag was naturally cooled and the temporarily-bonded laminated glass was taken out. The temporarily-bonded laminated glass was autoclaved at a temperature of 135°C and at a pressure of 1.2 MPa for 20 minutes to produce a laminated glass.

(Example 30)

An interlayer film for a laminated glass, and a laminated glass were produced in the same manner as in Example 29, except that the blending amount of the zinc oxide fine particle dispersion was changed to 7.00 parts by weight and the blending amount of the tin-doped indium oxide fine particle dispersion was changed to 1.40 parts by weight for producing an interlayer film for a laminated glass.

(Example 31)

An interlayer film for a laminated glass, and a laminated glass were produced in the same manner as in Example 29, except that the blending amount of the zinc oxide fine particle dispersion was changed to 0.70 parts by weight and the blending amount of the tin-doped indium oxide fine particle dispersion was changed to 2.80 parts by weight for producing an interlayer film for a laminated glass.

<Evaluation>

The laminated glasses obtained in Examples 29 to 31 were evaluated in the same manner as in Example 1. Table 6 shows the results.
[Table 6]

| | | Example 29 | Example 30 | Example 31 |
|---|---|---|---|---|
| Composition of interlayer film for laminated glass (parts by weight) | Zinc oxide fine particle dispersion | 8.82 | 7.00 | 0.70 |
| | Tin-doped indium oxide fine particle dispersion | 0.70 | 1.40 | 2.80 |
| | Polyvinyl butyral | 100 | 100 | 100 |
| | Plasticizer (total amount) | 40 | 40 | 40 |
| Physical properties of laminated glass | Concentration of zinc oxide fine particles (% by weight) | 0.63 | 0.50 | 0.05 |
| | Concentration of tin-doped indium oxide fine particles (% by weight) | 0.05 | 0.10 | 0.20 |
| | Tv (%) | 79.3 | 74.6 | 73.7 |
| | Tir (%) | 61.1 | 57.4 | 51.2 |

(Example 32)

(1) Production of a zinc oxide fine particle dispersion

An amount of 30 parts by weight of zinc oxide fine particles containing 4 mol% of gallium as a trivalent metallic element, 267 parts by weight of triethylene glycol di-2-ethylhexanoate as a plasticizer, 3 parts by weight of polyoxyethylene alkylether phosphate ester (in the general formula (1), $R^1$ represented a 2-ethylhexyl group having 8 carbon atoms, $R^2$ represented an ethylene group, $R^3$ represented a mixture of a hydrogen atom and $R^4(OR^5)_n$-, wherein $R^4$ represented a 2-ethylhexyl group and $R^5$ represented an ethylene group, the HLB value was 10.0, and "n" was an integer of 1 or more) as a dispersant, and 1125 parts by weight of zirconia beads were mixed to obtain a mixture. The obtained mixture was dispersed for four hours by using a batch-type bead mill to produce a zinc oxide fine particle dispersion.

(2) Production of an interlayer film for a laminated glass

An amount of 16.0 parts by weight of the obtained zinc oxide fine particle dispersion, and 100 parts by weight of a polyvinyl butyral resin (PVB: average polymerization degree of 1700, butyralization degree of 68.5 mol%, 30.6 mol% of hydroxyl group, and 0.9 mol% of acetyl group) as a thermoplastic resin were mixed. Triethylene glycol di-2-ethylhexanoate was further added as a plasticizer in such a manner that the total amount of the plasticizer reached 40 parts by weight with respect to 100 parts by weight of the thermoplastic resin, and the mixture was mixed to produce a thermoplastic resin composition (a skin layer) .
On the other hand, triethylene glycol di-2-ethylhexanoate was added as a plasticizer in such a manner that the total amount of the plasticizer reached 60 parts by weight with respect to 100 parts by weight of a polyvinyl butyral resin (PVB: average polymerization degree of 2450, butyralization degree of 65.5 mol%, 20.1 mol% of hydroxyl group, and 13.4 mol% of acetyl group), and the mixture was mixed to produce another thermoplastic composition (an intermediate layer). The obtained thermoplastic resin compositions (the skin layer and the intermediate layer) were molded by using a counter-rotating twin-screw extruder to produce an interlayer film for a laminated glass comprising an intermediate layer (thickness of 100 μm) sandwiched between the skin layers (thickness of 330 μm each).

(3) Production of a laminated glass

The obtained interlayer film for a laminated glass was interposed between two sheets of clear float glass (5 cm in height × 5 cm in width × 2.5 mm in thickness). The laminated body was placed in a vacuum bag and the vacuum bag was deaerated to 933.2 hPa. Subsequently, the vacuum bag was heated until the interior temperature of the vacuum bag reached 100°C and maintained at the temperature for 20 minutes. The vacuum bag was naturally cooled and the temporarily-bonded laminated glass was taken out. The temporarily-bonded laminated glass was autoclaved at a temperature of 135°C and at a pressure of 1.2 MPa for 20 minutes to produce a laminated glass.

(Example 33)

A zinc oxide fine particle dispersion, an interlayer film for a laminated glass, and a laminated glass were produced in the same manner as in Example 32, except that polyoxyethylene alkylether phosphate ester (in the general formula (1), $R^1$ represented a tridecyl group having 13 carbon atoms, $R^2$ represented an ethylene group, $R^3$ represented a mixture of a hydrogen atom and $R^4(OR^5)_n$-, wherein $R^4$ represented a tridecyl group and $R^5$ represented an ethylene group, the HLB value was 9.4, and "n" was an integer of 1 or more) was used as a dispersant.

<Evaluation>

The laminated glasses obtained in Examples 32 to 33 were evaluated in the same manner as in Example 1. Table 7 shows the results.

[Table 7]

<table>
<tr><td colspan="3"></td><td>Example 32</td><td>Example 33</td></tr>
<tr><td colspan="2" rowspan="4">Dispersant</td><td>$R^1$ in general formula (1)</td><td>2-ethythexyl group</td><td>tridecyl group</td></tr>
<tr><td>The number of carbon atoms of $R^1$</td><td>8</td><td>13</td></tr>
<tr><td>Alkylene portion of polyoxyalkylene</td><td>ethylene</td><td>ethylene</td></tr>
<tr><td>HLB value</td><td>10.0</td><td>9.4</td></tr>
<tr><td colspan="2" rowspan="2">Zinc oxide fine particles containing trivalent metallic element</td><td>Trivalent metal species</td><td>gallium</td><td>gallium</td></tr>
<tr><td>Content ratio of trivalent metal (mol %)</td><td>4</td><td>4</td></tr>
<tr><td rowspan="6">Zinc oxide fine particle dispersion</td><td rowspan="3">Composition (parts by weight)</td><td>Zinc oxide fine particles</td><td>30</td><td>30</td></tr>
<tr><td>Plasticizer (3GO)</td><td>267</td><td>267</td></tr>
<tr><td>Dispersant</td><td>3</td><td>3</td></tr>
<tr><td rowspan="3">Physical properties</td><td>Particle concentration (% by weight)</td><td>0.90</td><td>0.90</td></tr>
<tr><td>Tv (%)</td><td>81.7</td><td>81.5</td></tr>
<tr><td>Tir(%)</td><td>82.7</td><td>82.7</td></tr>
<tr><td colspan="2" rowspan="3">Composition of interlayer film for laminated glass (skin layer) (parts by weight)</td><td>Zinc oxide fine particle dispersion</td><td>16.0</td><td>16.0</td></tr>
<tr><td>Polyvinyl butyral</td><td>100</td><td>100</td></tr>
<tr><td>Plasticizer (total amount)</td><td>40</td><td>40</td></tr>
<tr><td colspan="2" rowspan="2">Physical properties of laminated glass</td><td>Tv (%)</td><td>76.1</td><td>76.1</td></tr>
<tr><td>Tir (%)</td><td>64.9</td><td>64.9</td></tr>
</table>

INDUSTRIAL APPLICABILITY

The present invention makes it possible to provide an interlayer film for a laminated glass in which zinc oxide fine particles are excellently dispersed, a laminated glass, and a zinc oxide fine particle dispersion.

## Claims

1. An interlayer film for a laminated glass,

which comprises:

zinc oxide fine particles containing a trivalent metallic element;
a polyvinyl acetal resin;
a dispersant; and
a plasticizer,
the dispersant having a structure represented by the following general formula (1) and having an HLB value of 8 to 12:

[Chemical formula 1]

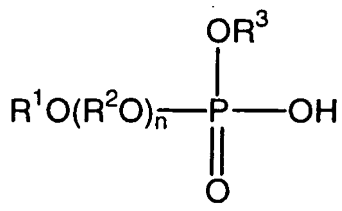

(1)

wherein $R^1$ represents an alkyl group having 5 to 14 carbon atoms or an aryl group having 6 to 14 carbon atoms,
$R^2$ represents an alkylene group having 2 to 5 carbon atoms,
$R^3$ represents a hydrogen atom or $R^4(OR^5)_n$-, wherein $R^4$ represents an alkyl group having 5 to 14 carbon atoms or an aryl group having 6 to 14 carbon atoms, and $R^5$ represents an alkylene group having 2 to 5 carbon atoms, and
"n" is an integer of 1 or more.

**2.** The interlayer film for a laminated glass according to claim 1,
wherein $R^1$ is a 2-ethylhexyl group or a tridecyl group.

**3.** The interlayer film for a laminated glass according to claim 1 or 2,
wherein the trivalent metallic element is gallium, aluminum, or indium.

**4.** The interlayer film for a laminated glass according to claim 1 or 2,
wherein the interlayer film comprises 1 to 50 parts by weight of the dispersant with respect to 100 parts by weight of the zinc oxide fine particles containing the trivalent metallic element.

**5.** The interlayer film for a laminated glass according to claim 1 or 2,
which further comprises a heat ray absorbent.

**6.** The interlayer film for a laminated glass according to claim 5,
wherein the heat ray absorbent is tin-doped indium oxide fine particles.

**7.** The interlayer film for a laminated glass according to claim 1 or 2,
wherein the interlayer film has a multi-layered structure obtained by laminating two or more resin layers,
the resin layers comprising a heat ray shielding layer,
the shielding layer containing:

the zinc oxide fine particles containing the trivalent metallic element;
the thermoplastic resin;
the dispersant having a structure represented by said general formula (1); and
the plasticizer.

**8.** A laminated glass,
which is obtained by using the interlayer film for a laminated glass according to claim 1 or 2.

**9.** A zinc oxide fine particle dispersion,
which comprises:

zinc oxide fine particles containing a trivalent metallic element;
a dispersant; and
a plasticizer,
the dispersant having a structure represented by the following general formula (1) and having an HLB value of 8 to 12:

[Chemical formula 1]

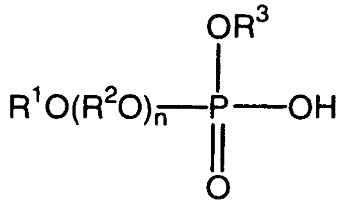

(1)

wherein $R^1$ represents an alkyl group having 5 to 14 carbon atoms or an aryl group having 6 to 14 carbon atoms,
$R^2$ represents an alkylene group having 2 to 5 carbon atoms,
$R^3$ represents a hydrogen atom or $R^4(OR^5)_n$-, wherein $R^4$ represents an alkyl group having 5 to 14 carbon atoms or an aryl group having 6 to 14 carbon atoms, $R^5$ represents an alkylene group having 2 to 5 carbon atoms, and
"n" is an integer of 1 or more.

**10.** The zinc oxide fine particle dispersion according to claim 9, wherein $R^1$ is a 2-ethylhexyl group or a tridecyl group.

**11.** The zinc oxide fine particle dispersion according to claim 9 or 10, wherein the trivalent metallic element is gallium, aluminum, or indium.

**12.** The zinc oxide fine particle dispersion according to claim 9 or 10, wherein the dispersion comprises 1 to 50 parts by weight of the dispersant with respect to 100 parts by weight of the zinc oxide fine particles containing the trivalent metallic element.

## Patentansprüche

**1.** Zwischenschichtfilm für ein Schichtglas, der umfaßt:

Zinkoxidfeinpartikel, die ein dreiwertiges metallisches Element enthalten,
ein Polyvinylacetalharz,
ein Dispergiermittel und
einen Weichmacher,
wobei das Dispergiermittel eine Struktur aufweist, die durch die folgende allgemeine Formel (1) dargestellt wird, und einen HLB-Wert von 8 bis 12 aufweist:

[Chemische Formel 1]

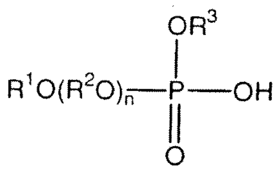

(1)

wobei $R^1$ eine Alkylgruppe mit 5 bis 14 Kohlenstoffatomen oder eine Arylgruppe mit 6 bis 14 Kohlenstoffatomen darstellt,
$R^2$ eine Alkylengruppe mit 2 bis 5 Kohlenstoffatomen darstellt,

$R^3$ ein Wasserstoffatom oder $R^4(OR^5)_n$- darstellt, wobei $R^4$ eine Alkylgruppe mit 5 bis 14 Kohlenstoffatomen oder eine Arylgruppe mit 6 bis 14 Kohlenstoffatomen darstellt und $R^5$ eine Alkylengruppe mit 2 bis 5 Kohlenstoffatomen darstellt, und
"n" eine ganze Zahl von 1 oder mehr ist.

**2.** Zwischenschichtfilm für ein Schichtglas nach Anspruch 1,
wobei $R^1$ eine 2-Ethylhexylgruppe oder eine Tridecangruppe ist.

**3.** Zwischenschichtfilm für ein Schichtglas nach Anspruch 1 oder 2,
wobei das dreiwertige metallische Element Gallium, Aluminium oder Indium ist.

**4.** Zwischenschichtfilm für ein Schichtglas nach Anspruch 1 oder 2,
wobei der Zwischenschichtfilm 1 bis 50 Gewichtsanteile des Dispergiermittels in Bezug auf 100 Gewichtsanteile der Zinkoxidfeinpartikel, die das dreiwertige metallische Element enthalten, umfaßt.

**5.** Zwischenschichtfilm für ein Schichtglas nach Anspruch 1 oder 2,
der ferner ein Wärmestrahlenabsorptionsmittel umfaßt.

**6.** Zwischenschichtfilm für ein Schichtglas nach Anspruch 5,
wobei das Wärmestrahlenabsorptionsmittel aus Zinn-dotierten Indiumoxidfeinpartikeln besteht.

**7.** Zwischenschichtfilm für ein Schichtglas nach Anspruch 1 oder 2,
wobei der Zwischenschichtfilm eine mehrschichtige Struktur aufweist, die durch Laminieren zweier oder mehr Harzschichten erhalten ist,
wobei die Harzschichten eine Wärmestrahlenabschirmschicht umfassen, wobei die Abschirmschicht umfaßt:

die Zinkoxidfeinpartikel, die das dreiwertige metallische Element enthalten,
das thermoplastische Harz,
das Dispergiermittel, das eine durch die allgemeine Formel (1) dargestellte Struktur aufweist, und
den Weichmacher.

**8.** Schichtglas,
das durch Verwenden des Zwischenschichtfilms für ein Schichtglas nach Anspruch 1 oder 2 erhalten ist.

**9.** Zinkoxidfeinpartikeidispersion,
die umfaßt:

Zinkoxidfeinpartikel, die ein dreiwertiges metallisches Element enthalten,
ein Dispergiermittel und
einen Weichmacher,
wobei das Dispergiermittel eine Struktur aufweist, die durch die folgende allgemeine Formel (1) dargestellt wird, und einen HLB-Wert von 8 bis 12 aufweist:

[Chemische Formel 1]

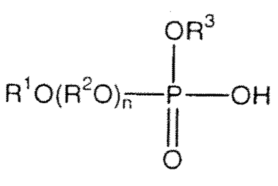

(1)

wobei $R^1$ eine Alkylgruppe mit 5 bis 14 Kohlenstoffatomen oder eine Arylgruppe mit 6 bis 14 Kohlenstoffatomen darstellt,
$R^2$ eine Alkylengruppe mit 2 bis 5 Kohlenstoffatomen darstellt,
$R^3$ ein Wasserstoffatom oder $R^4(OR^5)_n$- darstellt, wobei $R^4$ eine Alkylgruppe mit 5 bis 14 Kohlenstoffatomen oder eine Arylgruppe mit 6 bis 14 Kohlenstoffatomen darstellt, $R^5$ eine Alkylengruppe mit 2 bis 5 Kohlenstoffatomen darstellt, und
"n" eine ganze Zahl von 1 oder mehr ist.

**10.** Zinkoxidfeinpartikeldispersion nach Anspruch 9, wobei $R^1$ eine 2-Ethylhexylgruppe oder eine Tridecylgruppe ist.

**11.** Zinkoxidfeinpartikeldispersion nach Anspruch 9 oder 10, wobei das dreiwertige metallische Element Gallium, Aluminium oder Indium ist.

**12.** Zinkoxidfeinpartikeldispersion nach Anspruch 9 oder 10, wobei die Dispersion 1 bis 50 Gewichtsanteile des Dispergiermittels in Bezug auf 100 Gewichtsanteile der Zinkoxidfeinpartikel, die das dreiwertige metallische Element enthalten, umfaßt.

## Revendications

**1.** Film interstratifié pour un verre feuilleté, qui comprend :

des particules fines d'oxyde de zinc contenant un élément métallique trivalent ;
une résine de polyvinylacétal ;
un dispersant ; et
un plastifiant,
le dispersant ayant une structure représentée par la formule générale (1) suivante et ayant une valeur HLB de 8 à 12 :

[Formule chimique 1]

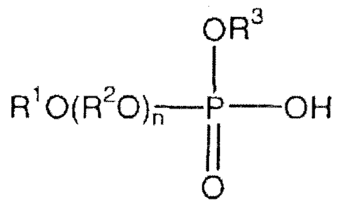

(1)

dans laquelle $R^1$ représente un groupe alkyle comprenant de 5 à 14 atomes de carbone ou un groupe aryle comprenant de 6 à 14 atomes de carbone,
$R^2$ représente un groupe alkylène comprenant de 2 à 5 atomes de carbone,
$R^3$ représente un atome d'hydrogène ou $R^4(OR^5)_n$-, où $R^4$ représente un groupe alkyle comprenant de 5 à 14 atomes de carbone ou un groupe aryle comprenant de 6 à 14 atomes de carbone, et $R^5$ représente un groupe alkylène comprenant de 2 à 5 atomes de carbone, et
« n » est un nombre entier valant 1 ou plus.

**2.** Film interstratifié pour un verre feuilleté selon la revendication 1, dans lequel $R^1$ est un groupe 2-éthylhexyle ou un groupe tridécyle.

**3.** Film interstratifié pour un verre feuilleté selon la revendication 1 ou 2, dans lequel l'élément métallique trivalent est le gallium, l'aluminium ou l'indium.

**4.** Film interstratifié pour un verre feuilleté selon la revendication 1 ou 2, dans lequel le film interstratifié comprend de 1 à 50 parties en poids du dispersant par rapport à 100 parties en poids des particules fines d'oxyde de zinc contenant l'élément métallique trivalent.

**5.** Film interstratifié pour un verre feuilleté selon la revendication 1 ou 2, qui comprend en outre un absorbant de rayons calorifiques.

**6.** Film interstratifié pour un verre feuilleté selon la revendication 5,

dans lequel l'absorbant de rayons calorifiques est des particules fines d'oxyde d'indium dopées à l'étain.

**7.** Film interstratifié pour un verre feuilleté selon la revendication 1 ou 2,
dans lequel le film interstratifié a une structure multicouche obtenue par stratification de deux couches de résine ou plus,
les couches de résine comprenant une couche de protection contre les rayons calorifiques,
la couche de protection contenant :

les particules fines d'oxyde de zinc contenant l'élément métallique trivalent ;
la résine thermoplastique ;
le dispersant ayant une structure représentée par ladite formule générale (1) ; et
le plastifiant.

**8.** Verre feuilleté,
qui est obtenu en utilisant le film interstratifié pour un verre feuilleté selon la revendication 1 ou 2.

**9.** Dispersion de particules fines d'oxyde de zinc,
qui comprend :

des particules fines d'oxyde de zinc contenant un élément métallique trivalent ;
un dispersant ; et
un plastifiant,
le dispersant ayant une structure représentée par la formule générale (1) suivante et ayant une valeur HLB de 8 à 12 :

[Formule chimique 1]

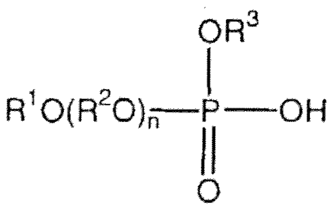

(1)

dans laquelle $R^1$ représente un groupe allyle comprenant de 5 à 14 atomes de carbone ou un groupe aryle comprenant de 6 à 14 atomes de carbone,
$R^2$ représente un groupe alkylène comprenant de 2 à 5 atomes de carbone,
$R^3$ représente un atome d'hydrogène ou $R^4(OR^5)_n$-, où $R^4$ représente un groupe alkyle comprenant de 5 à 14 atomes de carbone ou un groupe aryle comprenant de 6 à 14 atomes de carbone, $R^5$ représente un groupe alkylène comprenant de 2 à 5 atomes de carbone, et
« n » est un nombre entier valant 1 ou plus.

**10.** Dispersion de particules fines d'oxyde de zinc selon la revendication 9,
dans laquelle $R^1$ est un groupe 2-éthylhexyle ou un groupe tridécyle.

**11.** Dispersion de particules fines d'oxyde de zinc selon la revendication 9 ou 10,
dans laquelle l'élément métallique trivalent est le gallium, l'aluminium ou l'indium.

**12.** Dispersion de particules fines d'oxyde de zinc selon la revendication 9 ou 10,
dans laquelle la dispersion comprend de 1 à 50 parties en poids du dispersant par rapport à 100 parties en poids des particules fines d'oxyde de zinc contenant l'élément métallique trivalent.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0125162 A
- JP 2001302288 A
- EP 1785404 A1
- EP 1666559 A1
- JP 2005146174 A